# EUROPEAN PATENT SPECIFICATION

(11) **EP 3 306 067 B1**
(45) Date of publication and mention of the grant of the patent: **27.01.2021**
(21) Application number: 17191149.8
(22) Date of filing: 14.09.2017
(51) Int. Cl.: F02K 1/38, F02K 1/48, F02K 1/52, B64D 33/04

(54) **SYSTEM AND METHOD FOR REDUCTION OF TURBINE EXHAUST GAS IMPINGEMENT ON ADJACENT AIRCRAFT STRUCTURE**
SYSTEM UND VERFAHREN ZUR REDUZIERUNG DER TURBINENABGASBEAUFSCHLAGUNG AN EINER BENACHBARTEN FLUGZEUGSTRUKTUR
SYSTÈME ET PROCÉDÉ DE RÉDUCTION DE L'IMPACT DES GAZ D'ÉCHAPPEMENT DE TURBINE SUR UNE STRUCTURE D'AÉRONEF ADJACENTE

(30) Priority: 07.10.2016 US 201615288303
(43) Date of publication of application: 11.04.2018
(73) Proprietor: Rolls-Royce North American Technologies, Inc., Indianapolis, IN 46241 (US)
(72) Inventor: Sutterfield, David, Greenwood, IN Indiana 46143 (US); Pierluissi, Anthony, Indianapolis, IN Indiana 46239 (US); Lerg, Bryan, Carmel, IN Indiana 46074 (US)
(74) Representative: Rolls-Royce plc

(56) References cited:
- US-A- 3 174 282
- US-A- 4 566 270
- US-A1- 2008 272 228
- US-B1- 8 776 527

## Description

Current exhaust systems for turboprop and turboshaft gas turbine engines dump the exhaust gas just outside of the aircraft body allowing the hot gas to imping or "scrub" the downstream aircraft parts (wing, tail, nacelle, etc.) potentially causing damage or early wear to these parts.

The exhaust nozzle and plume from gas turbine engines, along with heated adjacent surfaces are also a potentially large source of infrared energy which may be used for targeting and/or tracking purposes. More specifically, the infrared energy may be used for targeting and/or tracking by heat seeking missiles and/or various forms of infrared imaging systems. Because the military mission of helicopters, turboprop cargo planes and other aircraft may involve flying at lower altitudes and at reduced speed in comparison to other high-performance military aircrafts, helicopters and turboprop planes are more susceptible to ground-to-air, infrared-guided missiles. For example, within at least some known helicopters, the exposed metal surfaces of the gas turbine engine exhaust may operate in excess of 800 degrees Fahrenheit, and thus emit strongly across many wavelengths of the electromagnetic spectrum including virtually all infrared wavelengths from 700 nm to 1 mm as hot exhaust gases flow past the exposed surfaces. Moreover, continued heating of aircraft surfaces, including the fuselage, during hover or flight may also create structural issues.

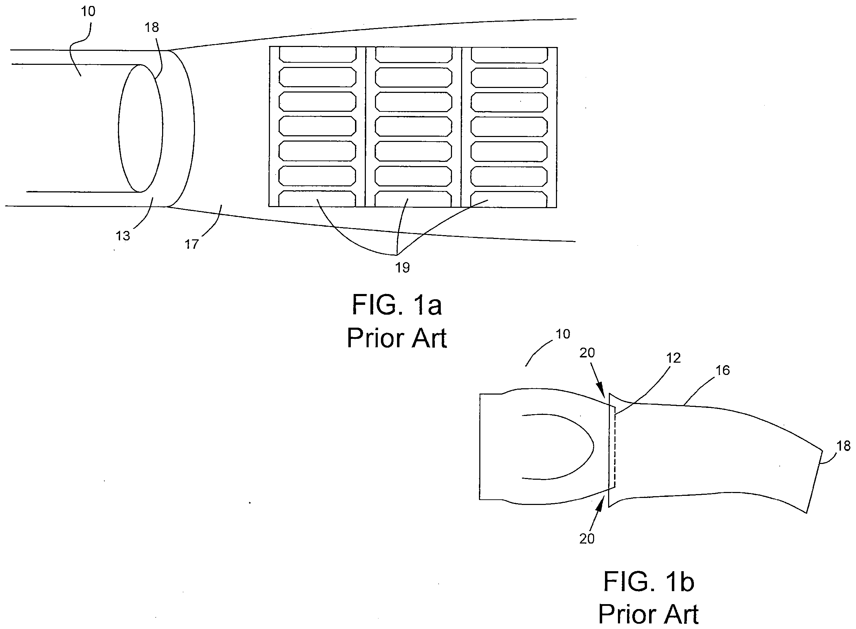

In order to prevent unwanted heating of aircraft surfaces and underlying structures, aircraft and power plant designers often include protective devices, such as heat shields, proximate to the aircraft exhaust as shown in Fig. 1a. In Fig. 1a, the exposed surface 17 adjacent to the turbine exhaust nozzle 18 of the gas turbine 10 is typically shielded by an exhaust deflector 13, heat resistant paint [not shown] and insulating panels 19. The addition of these protective devices results in decreased aircraft performance due to increased weight and aerodynamic drag and leads to increased costs. These protective devices are located aft of the exhaust outlet along an area exposed to the exhaust gas.

In addition, conventional exhaust systems attempt to cool the exhaust gas. Fig. 1b shows an ejector system used to cool the exhaust gas in conventional systems. The core exhaust nozzle 12 directs the exhaust gas into an ejector shroud 16 and the nozzle 12 and ejector shroud 16 form a secondary flow inlet 20. The secondary flow, typically entrained air or system cooling air is introduced and mixed symmetrically with the exhaust gases without consideration of its location to the adjacent aircraft surfaces. The addition of the cooling air reduces some of the deleterious effects described above but does not prevent the impingement on and subsequent scrubbing and heating of the adjacent surfaces. U.S. Patent 4 566 270 discloses a gas turbine engine infra-red radiation suppressor comprising an exhaust nozzle which is surrounded by a duct having a plurality of diffuser vanes at its downstream end. U.S. Patent 3 174 282 discloses a horizontally disposed jet engine having an asymmetrical gas conducting exhaust nozzle including an upper portion, a lower portion, and gas flow controlling noise suppressor means operatively mounted on said lower portion only to reduce the noise generated by and radiated from the exhaust gas jet. U.S. Patent 8 776 527 discloses a discharge nozzle having a centerbody and a conduit enclosing the centerbody, operable to receive exhaust flow from a turbine discharge of a gas turbine engine.

In order to obviate the above described deleterious effects, the disclosed exhaust system utilizes a combination of exhaust shaping, secondary flow injection and mixing to cause the exhaust gas to exit the nozzle at an angle that prevents the hot gas from "scrubbing" the downstream aircraft parts and prevents or reduces damage to these parts.

An exhaust system for the protection of an adjacent surface according to claim 1 is presented herein.

The disclosed subject matter, among others, includes a turbine engine core exhaust system with a core exhaust duct, a secondary air inlet and a duct having a passage having an upstream end, a downstream end, as well as a first portion and a second portion. The upstream end of the duct is proximate to the core exhaust duct and defines the secondary air inlet, where the first and second portions are proximate the downstream end. The system also includes a surface disruption in an interior of the first portion extending into the passage towards the second portion, where the second portion is free from the surface disruption in the first portion.

The disclosed subject matter further, among others, includes a method of bending an exhaust flow away from an adjacent surface according to claim 8.

Preferred embodiments according to the present subject matter will now be described with reference to the Figures, in which like reference numerals denote like elements.

The following will be apparent from elements of the figures, which are provided for illustrative purposes and are not necessarily to scale.
Figs. 1a and 1b illustrate a prior art conventional exhaust system.
Fig. 2 illustrates an exhaust system according to an embodiment of the disclosed subject matter.
Fig. 3 illustrates an fuselage concept exhaust system according to an additional embodiment of the disclosed subject matter.
Figs. 4a-4d illustrate axial cross sections according to embodiments of the disclosed subject matter.
Figs. 5a-5c illustrate exhaust shroud exits and lobes according to embodiments of the disclosed subject matter.
Fig. 6 illustrates an underwing concept exhaust system according to an embodiment of the disclosed subject matter.
Fig. 7 is a flow chart for a method of bending an exhaust flow away from an adjacent surface according to an embodiment of the disclosed subject matter.
Figs. 8a and 8b illustrate the plurality of lobes on the exit of a rectangular exhaust duct according to an embodiment of the disclosed subject matter.
Figs. 9a and 9b illustrate the plurality of lobes on the exit of a circular exhaust duct according to an embodiment of the disclosed subject matter.

While the present disclosure is susceptible to various modifications and alternative forms, specific embodiments have been shown by way of example in the drawings and will be described in detail herein. It should be understood, however, that the present disclosure is not intended to be limited to the particular forms disclosed.

For the purposes of promoting an understanding of the principles of the disclosure, reference will now be made to a number of illustrative embodiments illustrated in the drawings and specific language will be used to describe the same.

The proposed exhaust system utilizes exhaust shaping and fluid dynamics to cool the exhaust gas and direct it away from the aircraft structure. Secondary inlets are used to provide the cooling air and to form cooling layers on adjacent aircraft structure.

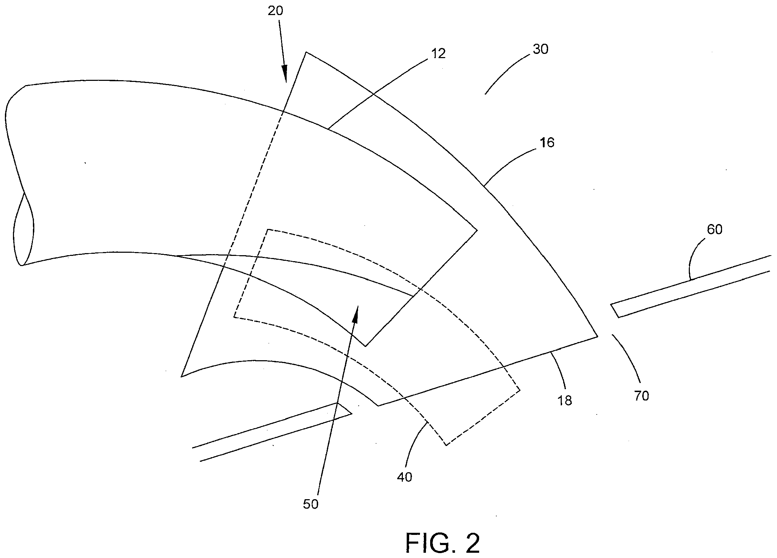

Fig. 2 describes an embodiment of the disclosed subject matter. As illustrated in Fig. 2, an ejector 30 is formed from the turbine core exhaust nozzle 12 and an ejector shroud 16 having secondary flow inlet 20. The inlet 20 in the embodiment shown circumscribes the turbine core exhaust nozzle 12, however other embodiments may not be so limited. Engine exhaust gasses flowing through core exhaust nozzle 12 (primary flow area) in the ejector 30 serve as the motive fluid, passing through the ejector shroud 16 to form a low pressure area that creates suction or viscous draw on the secondary flow introduced through the ejector inlet 20. As shown in Fig. 2, the turbine core exhaust nozzle 12 incorporates a plurality of forced mixing lobes 50 that extend from the engine exhaust nozzle 12 into a region 40 within the ejector shroud 16. The region is spaced apart from the adjacent surface 60. The distribution of the forced mixing lobes 50 is asymmetric in the cross section of the ejector shroud 16 proximate the ejector shroud outlet 18, such that lobes 50 are only placed in the region farthest away from the adjacent surface 60 and the area of the shroud outlet 18 closest to the adjacent surface 60 is free from lobes 50 as shown in Fig. 2, or the numbers and/or size are greatest in that region.

Also shown in Fig. 2 is an auxiliary outlet 70 is positioned between the ejector shroud outlet 18 and the adjacent surface 60. The air flow supplied to the auxiliary outlet 70 may be entrained air or cooling air from another compartment. The auxiliary outlet 70 maintains a layer of cooler air between the adjacent surface 60 and the exhaust plume. Fig. 2 shows that the fluid path through the exhaust system has a centerline that bends away from the adjacent surface 60 to further urge the flow away from the adjacent surface 60.

The plurality of lobes 50 forces mixing of the secondary and core exhaust flows which slows the velocity of the combined flow as it is exhausted. This asymmetric mixing and slowing of the flow urges the combined exhaust flow in the direction of the lobes and away from the adjacent surface 60. The adjacent surface 60 may be a nacelle, fuselage, wing, flap, tail or other aircraft structure positioned proximate the ejector shroud outlet 18 which would be impinged upon but for the described subject matter.

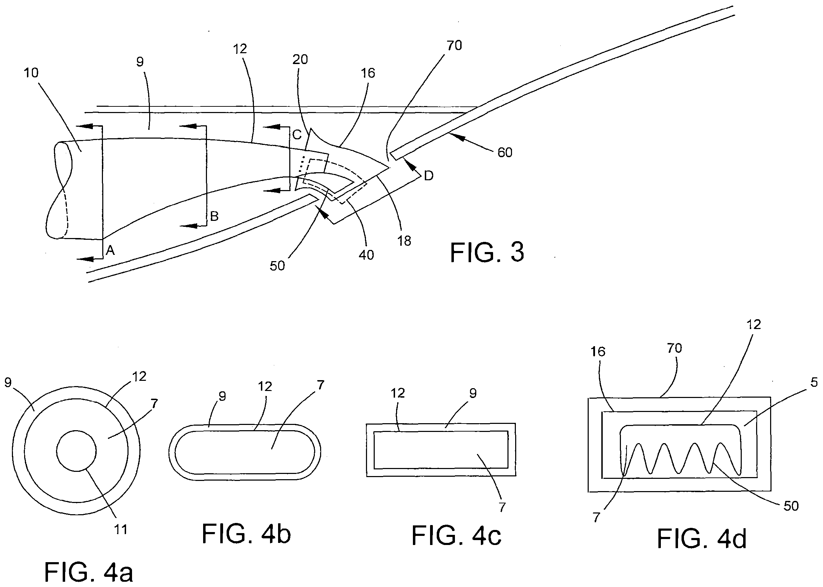

Fig. 3 illustrates a disclosed exhaust system used with a turbine engine 10 within an aircraft fuselage with the exhaust being directed down and aft from the adjacent surface 60. In the embodiment shown in Fig. 3, the plurality of lobes 50 extend into region 40 well beyond the core exhaust nozzle 12. Figs. 4a-4d show the cross section of the exhaust nozzle 12, ejector shroud 16 and ejector exhaust outlet 18 with respect to stream positions A, B, C and D as shown in Fig. 3. In a preferred embodiment the flow paths transition from a round cross-section as the flow exits the gas turbine 10, shown in Fig. 4a, to rectangular or square when exiting the ejector shroud 16, as shown in Fig. 4d.

Fig. 4a shows a cross section of the exhaust nozzle 12 and center cone 11 at stream position A (i.e., as taken along the line 'A') of Fig. 3. The core exhaust passage 7 exiting the turbine 10 has a round shape corresponding to the turbine outlet (not shown). The secondary air passage 9 is also shown as round however its shape at this station is more dependent upon the shape of the fuselage (not shown) or nacelle (not shown) than the turbine outlet (not shown).

Fig. 4b shows a cross section of the exhaust nozzle 12 and secondary air passage 9 at stream position B (i.e., as taken along the line 'B') of Fig. 3. The core exhaust passage 7 and the secondary air passage 9 are shown transitioning from a round to rectangular shape.

Fig. 4c shows a cross section of the exhaust nozzle 12 and secondary air passage 9 at stream position C (i.e., as taken along the line 'C') of Fig. 3. The core exhaust passage 7 and the secondary air passage 9 have substantially transitioned to a rectangular shape as shown. The transition in shape may be rapid or gradual, and the changes and location of stream positions A-C are illustrative only, other transitions are equally envisioned.

Fig. 4d shows a cross section of the exhaust nozzle 12, plurality of lobes 50, injected secondary air 5, auxiliary air outlet 70, ejector shroud 16 and core exhaust passage 7 at stream position D (i.e., as taken along the line 'D') of Fig. 3. The plurality of lobes 50 are on the opposite side of the shroud outlet 18 than the adjacent surface 60. The mixing of the core and secondary flows forced by the lobes 50 along with less or no mixing on the side closest to the adjacent surface 60 (as shown, the upper portion is closest and the lower portion is farthest from the adjacent surface 60) urges flow downward away from the adjacent surface 60. The transition from a circular to rectangular exhaust duct with passive mixing on the top and sides of the rectangular exit and a lobed mixer on the bottom side provide a level of mixing but mainly function to turn the flow down so that it is less likely to impinge on the cowling and flaps aft of the exhaust system.

While each of the lobes 50 shown in Fig. 4d are represented as being symmetric, the lobe may asymmetric themselves or heterogeneous with respect to the other of the plurality of lobes 50.

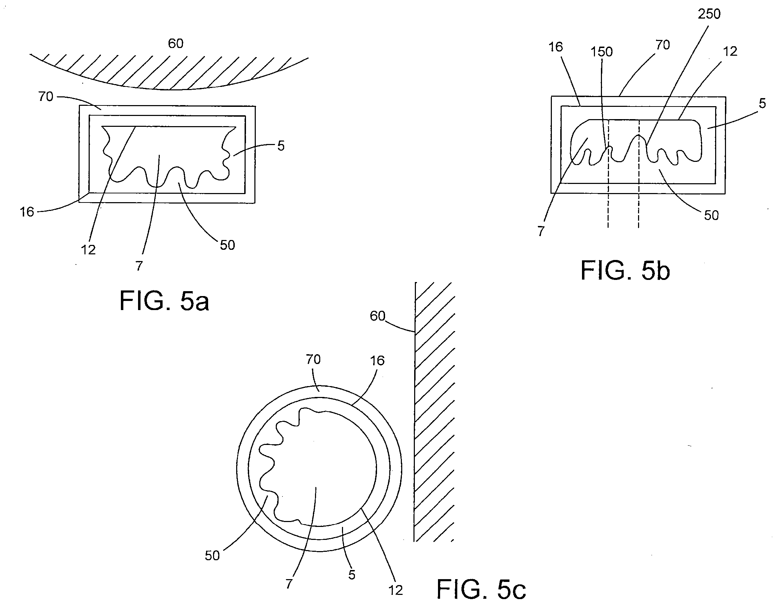

Fig. 5a -5c illustrate other arrangements of the lobes 50 envisioned for the disclosed subject matter. Fig. 5a shows the plurality of forced mixing lobes 50 distributed on the three regions (right side, bottom side and left side) farthest from the adjacent surface 60. Fig. 5b shows the same stream position however with the plurality of lobes 50 being heterogeneous and some of the lobes 50, for example lobe 150, are asymmetrical while other lobes for example lobe 250 is symmetric. Fig. 5c illustrates a round shroud outlet in which the plurality of lobes 50 are located on the hemisphere farthest from the vertical adjacent surface 60 (for example the side of a fuselage or a vertical tail).

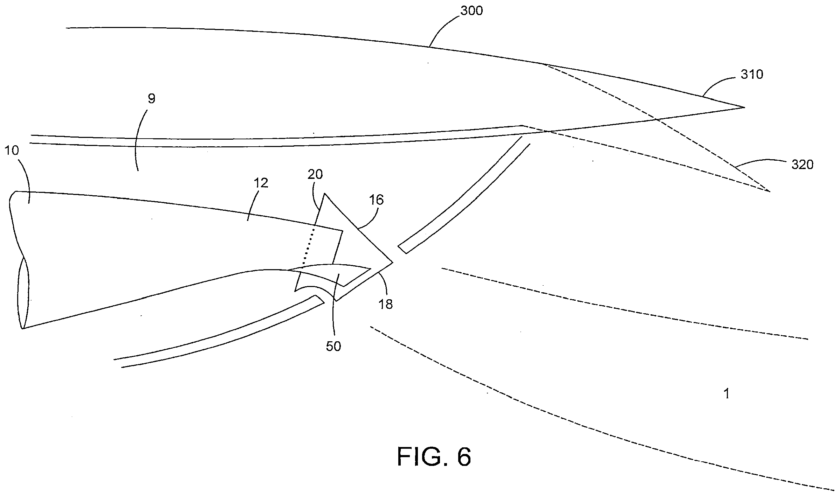

Fig. 6 illustrates an embodiment wherein the exhaust system is under a wing 300 and the exhaust plume 1 is urged away from scrubbing the trailing edge 310 of the wing 300 and flaps/control surface 320.

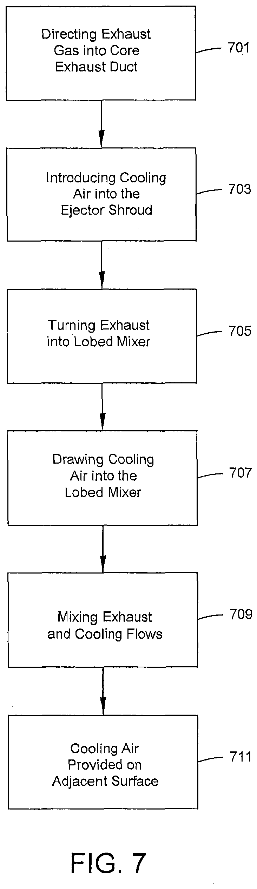

Fig. 7 is a flow chart describing the operation of the exhaust system for turning the flow away from adjacent surfaces on the aircraft. The exhaust gas exits turbine engine 10 along engine axis into the core exhaust duct and is directed by the duct into the exhaust nozzle 12 and ejector shroud 16 as shown in Block 701. The exhaust duct transitions from round to rectangular prior to the start of the lobed mixer 50 and terminates at an optimum point inside of the ejector (giving the best combination of flow turning and mixing).

As shown in Block 703, cooling air from scoops or compartments is captured at the ejector inlets 20, and introduced into the ejector shroud 16. The presence of the high velocity exhaust gas inside the ejector "pulls" the cool air from inside the nacelle or other compartment whereby it forms a thick layer of cool air along the ejector walls and provides significant cooling to the walls. The ejector is shaped to encourage the cool air to remain attached to and flow along the walls. Three sides of the exhaust duct are formed to provide this cooling effect, and as they control the amount of mixing between the cool air and the exhaust gas, they maintain a thick layer of cool air against a desired surface (in this case the ejector wall). The fourth side of the exhaust nozzle 12 forms a lobed mixer 50. The exhaust gas is turned to follow the passage defined by the walls of the ejector shroud 16 as shown in Block 705 and is forced through the lobed mixer 50 for integration of exhaust gas and cooling air. Likewise the secondary or cooling air from the ejector inlet 20 is drawn into the lobed mixer 50 as shown in Block 707 and exhaust gas exits the ejector and mixes with cooling air and as a result of this, asymmetric mixing is directed away from adjacent surfaces of the aircraft as shown in Block 709. In addition to cooling the exhaust gas this mixing reduces the velocity of the exhaust gas and enhances the turning action. The lobed mixer 50 combines exhaust gas and cooling air in such a way that the exhaust gas and plume are directed towards the lobed mixer 50. As discussed previously, the centerline of the ejector shroud can be curved in such a way so as to augment the tendency of the exhaust gas to move towards the lobed mixer 50 and away from the adjacent surface 60 of the aircraft. The amount of flow turning in the device may be controlled by the geometry of the components to give the best balance of turning (with a reduction in heat damage to aircraft parts in close proximity) with minimum impact to performance.

In addition, the cooling air not mixed with the core exhaust gas maybe released to form a layer along both sides of the outer wall of the shroud which separates the hot gases from the plume and the adjacent surfaces that bound or are typically in the path of the plume if not redirected as shown in Block 711.

There are several mixing enhancement features included in this subject matter to facilitate enhancing shearing and mixing between primary nozzle exhaust and ambient air flows. The exhaust nozzle 12 exit facilitates enhances mixing of ambient cooling air and exhaust gases discharged from core engine using chevron-shaped extensions of exhaust nozzle. In one embodiment, each chevron-shaped extension is cup- or spoon-shaped and includes a concave surface that faces inwardly towards the hot primary nozzle exhaust flow.

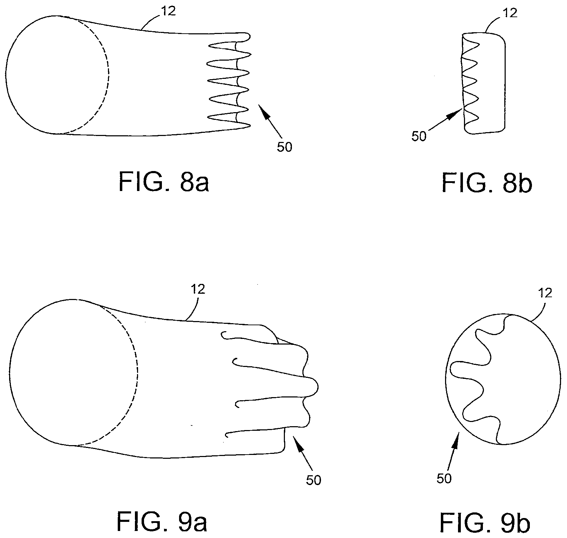

Referring to Figs. 8a and 8b, the core exhaust nozzle 12 exit is substantially rectangular in cross-section and facilitates enhances mixing of ambient cooling air and exhaust gases discharged from core engine via lobes 50 or (corrugated surfaces) of primary nozzle 12. In this embodiment, each lobe 50 or corrugation is aligned such that the axis of corrugation extends substantially in the same direction as that of the hot primary nozzle exhaust flow.

However, the enhanced or forced mixing may be accomplished with or without the use of corrugations and regardless of the cross-sectional shape of the nozzle. For example, in the exemplary embodiment illustrated in Figs. 9a and 9b, exhaust nozzle 12 has a substantially circular cross sectional profile and includes a plurality of lobes 50.

Likewise the use of a surface disruption such as those chosen from the group consisting of wedges, wings, vanes, teeth, channels, corrugations and ridges may also be used within the ejector to provide the asymmetric mixing that cools and urges the exhaust plume away from aircraft surfaces. Wedges, wings, vanes, teeth, channels, corrugations and ridges all extend into or away from air flow within the ejector shroud thus modifying a directional component of the motion of the air flow within the ejector.

The disclosed exhaust system may also be tailored for use as an IR suppression device. Internal cooling air supply passages (secondary air) may be modulated using valves to control the area of the secondary air passage to provide a variable IR suppression system that provides a high level of suppression when desired or minimal suppression for enhanced aero performance (etc. range, speed, etc.). Referring to Fig. 2, a portion of the ambient air is channeled through the inlet 20 and to the lobes 50, during operation, wherein remaining air entering through inlet 20 on the top portion of the ejector provides a layer of cooling air to facilitate cooling aft portions of ejectors inner surfaces for example the inner surface of the shroud 16, which may be visible through the exhaust shroud outlet 18. Accordingly the lobes 50 facilitate reducing an operating temperature of exhaust flow path surfaces. Accordingly, the exhaust system mitigates the operating temperature of engine exhaust through exhaust system, thus suppressing the infrared signature generated by core engines.

As described above, having the lobes 50 on one portion causes the high velocity exhaust gas to mix with the lower velocity cooling air to influence the plume to mix out quicker than with a stock tailpipe while also drawing the plume away from the protected surface of the aircraft. The exhaust system keeps a layer of cooling air on the exhaust duct thereby providing cooler "visible" exhaust surfaces, thus minimizing damage and reducing heat signature of these surface.

The above-described gas turbine engine assemblies are cost-effective and highly reliable. Each assembly includes an exhaust assembly that facilitates suppressing an infrared signature generated by the core engines. Moreover, in the exemplary embodiment, the exhaust assembly initially turns and accelerates the exhaust prior to mixing the exhaust with an ambient airflow. Additional cooling air facilitates cooling flow path surfaces that are visible through the exhaust assembly discharge. As a result, the exhaust system assembly facilitates suppressing an infrared signature of the engine in a cost-effective and reliable manner.

Although examples are illustrated and described herein, embodiments are nevertheless not limited to the details shown, since various modifications and structural changes may be made therein by those of ordinary skill within the scope of the following claims.

## Claims

1. An exhaust system for the protection of an adjacent surface (60), the exhaust system comprising:
an ejector (30), the ejector including an engine exhaust nozzle (12) with a core exhaust passage (7) having one side closer to the adjacent surface than an other side of the core exhaust passage and providing a core exhaust flow, when in use;
an ejector inlet (20) providing a secondary flow, wherein the core exhaust flow has a higher velocity than the secondary flow;
an ejector shroud (16);
an ejector shroud outlet (18), the ejector shroud outlet being in fluid communication with the atmosphere;
an adjacent surface (60), wherein the adjacent surface partially bounds a region proximate to and downstream of the ejector shroud outlet; and **characterized by**: a plurality of forced mixing lobes (50) extending from the engine exhaust nozzle within a region spaced apart from the adjacent surface such that the distribution of forced mixing lobes is asymmetric in the cross section of the ejector shroud proximate the ejector shroud outlet, wherein a region of the ejector shroud outlet closest to the adjacent surface is free from the plurality of forced mixing lobes, such that mixing of the secondary flow and the core exhaust flow proximate the one side closer to the adjacent surface is minimized.

2. The exhaust system of Claim 1 further comprising an auxiliary outlet (70) positioned between the ejector shroud outlet (18) and the adjacent surface (60).

3. The exhaust system of any preceding claim, wherein a fluid path defined by the ejector shroud (16) has a centerline that bends away from the adjacent surface (60).

4. The exhaust system of any preceding claim, wherein a cross section of the ejector shroud outlet (18) is substantially rectangular.

5. The exhaust system of any preceding claim, wherein the plurality of forced mixing lobes (50) extend from the engine exhaust nozzle (12) within the ejector shroud (16).

6. The exhaust system of any preceding claim, wherein each of the plurality of forced mixing lobes (50) are asymmetrically shaped.

7. The exhaust system of any preceding claim wherein the adjacent surface (60) is from the group consisting of a nacelle, fuselage, wing, flap and tail.

8. A method of bending an exhaust flow away from an adjacent surface (60) using the exhaust system as claimed in any preceding claim, comprising the steps of:
providing a core exhaust flow within a core exhaust passage (7), the core exhaust passage having one side closer to the adjacent surface than an other side of the core exhaust passage;
providing a secondary flow (70) between the other side of the core exhaust passage and the core exhaust flow, wherein the core exhaust flow has a higher velocity than the secondary flow;
reducing the velocity of the core exhaust flow proximate the other side by mixing the core exhaust flow and the secondary flow within the core exhaust passage proximate the other side of the core exhaust passage; and,
maintaining the velocity of the core exhaust flow proximate the one side greater than the reduced velocity thereby bending the exhaust flow away from the adjacent surface;
further comprising providing the secondary flow between the one side of the core exhaust passage and the core exhaust flow and minimizing the mixing of the secondary flow and the core exhaust flow proximate the one side.

9. The method of Claim 8, wherein the core exhaust passage (7) is substantially rectangular.

10. The method of Claim 8 or Claim 9, wherein the adjacent surface (60) is from the group consisting of a nacelle, fuselage, wing, flap and tail.

## Patentansprüche

1. Abgassystem zum Schutz einer benachbarten Oberfläche (60), wobei das Abgassystem Folgendes umfasst:
einen Auswerfer (30), wobei der Auswerfer eine Triebwerksabgasdüse (12) mit einem Kernabgaskanal (7) beinhaltet, dessen eine Seite näher an der benachbarten Oberfläche als eine andere Seite des Kernabgaskanals ist und der einen Kernabgasfluss bereitstellt, wenn er in Gebrauch ist;
einen Auswerfereinlass (20), der einen sekundären Fluss bereitstellt, wobei der Kernabgasfluss eine höhere Geschwindigkeit als der sekundäre Fluss aufweist;
eine Auswerferabdeckung (16);
einen Auswerferabdeckungsauslass (18), wobei der Auswerferabdeckungsauslass in Fluidkommunikation mit der Atmosphäre steht;
eine benachbarte Oberfläche (60), wobei die benachbarte Oberfläche einen Bereich nahe dem und stromabwärts des Auswerferabdeckungsauslasses teilweise begrenzt; und **gekennzeichnet durch**:
eine Vielzahl von Zwangsmischkeulen (50), die sich von der Triebwerksabgasdüse innerhalb eines Bereichs erstreckt, der von der benachbarten Oberfläche beabstandet ist, sodass die Verteilung von Zwangsmischkeulen im Querschnitt der Auswerferabdeckung nahe dem Auswerferabdeckungsauslass asymmetrisch ist, wobei ein Bereich des Auswerferabdeckungsauslasses, welcher der benachbarten Oberfläche am nächsten ist, frei von der Vielzahl von Zwangsmischkeulen ist, sodass das Mischen des sekundären Flusses und des Kernabgasflusses nahe der einen Seite näher an der benachbarten Oberfläche minimiert ist.

2. Abgassystem nach Anspruch 1, ferner umfassend einen Hilfsauslass (70), der zwischen dem Auswerferabdeckungsauslass (18) und der benachbarten Oberfläche (60) positioniert ist.

3. Abgassystem nach einem vorhergehenden Anspruch, wobei ein Fluidweg, der durch die Auswerferabdeckung (16) definiert ist, eine Mittellinie aufweist, die sich weg von der benachbarten Oberfläche (60) biegt.

4. Abgassystem nach einem vorhergehenden Anspruch, wobei ein Querschnitt des Auswerferabdeckungsauslasses (18) im Wesentlichen rechteckig ist.

5. Abgassystem nach einem vorhergehenden Anspruch, wobei sich die Vielzahl von Zwangsmischkeulen (50) von der Triebwerksabgasdüse (12) innerhalb der Auswerferabdeckung (16) erstreckt.

6. Abgassystem nach einem vorhergehenden Anspruch, wobei jede aus der Vielzahl von Zwangsmischkeulen (50) asymmetrisch geformt ist.

7. Abgassystem nach einem vorhergehenden Anspruch, wobei die benachbarte Oberfläche (60) aus der Gruppe ist, die aus einer Gondel, einem Rumpf, einem Flügel, einer Klappe und einem Heck besteht.

8. Verfahren zum Biegen eines Abgasflusses weg von einer benachbarten Oberfläche (60) unter Verwendung des Abgassystems nach einem vorhergehenden Anspruch, umfassend die folgenden Schritte:
Bereitstellen eines Kernabgasflusses innerhalb eines Kernabgaskanals (7), wobei der Kernabgaskanal eine Seite aufweist, die näher an der benachbarten Oberfläche als eine andere Seite des Kernabgaskanals ist;
Bereitstellen eines sekundären Flusses (70) zwischen der anderen Seite des Kernabgaskanals und dem Kernabgasfluss, wobei der Kernabgasfluss eine höhere Geschwindigkeit als der sekundäre Fluss aufweist;
Reduzieren der Geschwindigkeit des Kernabgasflusses nahe der anderen Seite durch Mischen des Kernabgasflusses und des sekundären Flusses innerhalb des Kernabgaskanals nahe der anderen Seite des Kernabgaskanals; und
Halten der Geschwindigkeit des Kernabgasflusses nahe der einen Seite größer als die reduzierte Geschwindigkeit, wodurch der Abgasfluss weg von der benachbarten Oberfläche gebogen wird;
ferner umfassend das Bereitstellen des sekundären Flusses zwischen der einen Seite des Kernabgaskanals und dem Kernabgasfluss und das Minimieren des Mischens des sekundären Flusses und des Kernabgasflusses nahe der einen Seite.

9. Verfahren nach Anspruch 8, wobei der Kernabgaskanal (7) im Wesentlichen rechteckig ist.

10. Verfahren nach Anspruch 8 oder Anspruch 9, wobei die benachbarte Oberfläche (60) aus der Gruppe ist, die aus einer Gondel, einem Rumpf, einem Flügel, einer Klappe und einem Heck besteht.

## Revendications

1. Système d'échappement destiné à la protection d'une surface adjacente (60), le système d'échappement comprenant :
un éjecteur (30), l'éjecteur comprenant une buse d'échappement de moteur (12) avec un passage d'échappement de noyau (7) possédant un côté plus proche de la surface adjacente qu'un autre côté du passage d'échappement de noyau et fournissant un écoulement d'échappement de noyau, lorsqu'il est utilisé ;
une entrée d'éjecteur (20) fournissant un écoulement secondaire, ledit écoulement d'échappement de noyau possédant une vitesse plus élevée que l'écoulement secondaire ;
une virole d'éjecteur (16) ;
une sortie de virole d'éjecteur (18), la sortie de virole d'éjecteur étant en communication fluidique avec l'atmosphère ;
une surface adjacente (60), ladite surface adjacente délimitant partiellement une zone à proximité et en aval de la sortie de virole d'éjecteur ; et **caractérisé par** :
une pluralité de lobes de mélange forcé (50) s'étendant à partir de la buse d'échappement de moteur à l'intérieur d'une zone espacée de la surface adjacente de sorte que la distribution des lobes de mélange forcé soit asymétrique dans la section transversale de la virole d'éjecteur à proximité de la sortie de virole d'éjecteur, une zone de la sortie de virole d'éjecteur la plus proche de la surface adjacente étant exempte de la pluralité de lobes de mélange forcés, de sorte que le mélange de l'écoulement secondaire et de l'écoulement d'échappement de noyau à proximité du côté plus proche de la surface adjacente est minimisé.

2. Système d'échappement selon la revendication 1, comprenant en outre une sortie auxiliaire (70) positionnée entre la sortie de virole d'éjecteur (18) et la surface adjacente (60).

3. Système d'échappement selon l'une quelconque des revendications précédentes, un trajet de fluide défini par la virole d'éjecteur (16) possédant une ligne centrale qui se courbe au loin de la surface adjacente (60).

4. Système d'échappement selon l'une quelconque des revendications précédentes, une section transversale de la sortie de virole d'éjecteur (18) étant sensiblement rectangulaire.

5. Système d'échappement selon l'une quelconque des revendications précédentes, ladite pluralité de lobes de mélange forcé (50) s'étendant à partir de la buse d'échappement de moteur (12) à l'intérieur de la virole d'éjecteur (16).

6. Système d'échappement selon l'une quelconque des revendications précédentes, chacun de la pluralité de lobes de mélange forcé (50) étant de forme asymétrique.

7. Système d'échappement selon l'une quelconque des revendications précédentes, ladite surface adjacente (60) faisant partie du groupe constitué d'une nacelle, d'un fuselage, d'une aile, d'un volet et d'une queue.

8. Procédé de flexion d'un écoulement d'échappement au loin d'une surface adjacente (60) à l'aide du système d'échappement selon l'une quelconque des revendications précédentes, comprenant les étapes de :
fourniture d'un écoulement d'échappement de noyau à l'intérieur d'un passage d'échappement de noyau (7), le passage d'échappement de noyau possédant un côté plus proche de la surface adjacente qu'un autre côté du passage d'échappement de noyau ;
fourniture d'un écoulement secondaire (70) entre l'autre côté du passage d'échappement de noyau et l'écoulement d'échappement de noyau, ledit écoulement d'échappement de noyau possédant une vitesse plus élevée que l'écoulement secondaire ;
réduction de la vitesse de l'écoulement d'échappement de noyau à proximité de l'autre côté en mélangeant l'écoulement d'échappement de noyau et l'écoulement secondaire à l'intérieur du passage d'échappement de noyau à proximité de l'autre côté du passage d'échappement de noyau ; et,
maintien de la vitesse de l'écoulement d'échappement de noyau à proximité d'un côté supérieure à la vitesse réduite courbant ainsi l'écoulement d'échappement au loin de la surface adjacente ;
comprenant en outre la fourniture de l'écoulement secondaire entre le côté du passage d'échappement de noyau et l'écoulement d'échappement de noyau et la minimisation du mélange de l'écoulement secondaire et de l'écoulement d'échappement de noyau à proximité d'un côté.

9. Procédé selon la revendication 8, ledit passage d'échappement de noyau (7) étant sensiblement rectangulaire.

10. Procédé selon la revendication 8 ou 9, ladite surface adjacente (60) faisant partie du groupe constitué d'une nacelle, d'un fuselage, d'une aile, d'un volet et d'une queue.
